# EUROPÄISCHE PATENTSCHRIFT

(11) **EP 1 511 141 B1**
(45) Veröffentlichungstag und Bekanntmachung des Hinweises auf die Patenterteilung: **17.09.2008**
(21) Anmeldenummer: 04018423.6
(22) Anmeldetag: 04.08.2004
(51) Int. Cl.: H02G 3/04, H02G 3/12

(54) **Kanal für Leitungsführung und/oder Geräteeinbau**
Channel for cabling and/or apparatus mounting
Canalisation pour câblage et/ou montage d'appareillage

(30) Priorität: 26.08.2003 DE 20313161 U
(43) Veröffentlichungstag der Anmeldung: 02.03.2005
(73) Patentinhaber: Tehalit GmbH, 67716 Heltersberg (DE)
(72) Erfinder: Kauf, Peter, 66482 Zweibrücken (DE); Vatter, Klaus, 66978 Clausen (DE)
(74) Vertreter: Patentanwälte Möll und Bitterich

(56) Entgegenhaltungen:
- EP-A2- 0 767 521

## Beschreibung

Die Erfindung betrifft Kanäle für Leitungsführung und/oder Geräteeinbau gemäß dem Oberbegriff des Anspruchs 1.

Kanäle für Leitungsführung und/oder Geräteeinbau bestehen in aller Regel aus einem trogförmigen Unterteil und einem darauf lösbar aufrastbaren Deckel. Die Querschnittsform ist meist rechteckig. Es sind jedoch auch dreieckige Querschnitte bekannt, ebenso kreisrunde bzw. der Kreisform angenäherte Querschnitte. Da die Anforderungen an die Aufnahmekapazität derartiger Kanäle sehr unterschiedlich sind, müssen Hersteller und Händler stets eine Vielzahl unterschiedlicher Typen vorrätig halten. Des weiteren stellt sich oft heraus, dass die zunächst angenommene Aufnahmekapazität nicht ausreicht, so dass der einmal installierte Kanal demontiert und durch einen größeren ersetzt werden muss. Das ist unbefriedigend.

Es hat deshalb nicht an Versuchen gefehlt, die Kanäle in unterschiedlichen Größen und Formen aus standardisierten Elementen modulartig zusammenzubauen. Es sei beispielsweise verwiesen auf die DE-AS 12 36 621, EP 1 172 910 A, DE 100 51 176 A, EP 1 229 625 A, DE 101 13 611 A oder EP 1 271 733 A.

Alle diese Schriften offenbaren Konstruktionen, die die Herstellung von Leitungsführungs- und/oder Geräteeinbaukanälen mit unterschiedlichen Querschnitten ermöglichen. Allerdings sind die Verbindungselemente zwischen den Modulen meistens so ausgelegt, dass eine nachträgliche Änderung kaum oder nicht möglich ist. In anderen Fällen ergeben sich unschöne Außenflächen. Manche Konstruktionen besitzen eine nur geringe Festigkeit. Jedenfalls konnten sich derartige, aus Modulen zusammengesetzte Kanäle am Markt nicht behaupten.

Der vorliegenden Erfindung liegt die Aufgabe zugrunde, einen Kanal für Leitungsführung und/oder Geräteeinbau anzugeben, der aus diversen Grundprofilen in unterschiedlichen Größen und für unterschiedliche Funktionen zusammengesteckt werden kann, für die unterschiedlichsten Funktionen geeignet ist und auch ein formschönes Äußeres bietet.

Diese Aufgabe wird gelöst durch einen Kanal mit den Merkmalen des Anspruchs 1.

Basiselement des erfindungsgemäßen Kanals sind zwei Seitenprofile, die mit angeformten Halteprofilen versehen sind, passend zu den Rastprofilen des Deckels. Dies bedeutet, dass mit zwei Seitenprofilen und zwei Deckeln ein Kanal mit minimal flachem Querschnitt realisiert werden kann.

Des weiteren ist wenigstens ein U-Profil vorgesehen, dessen primäre Aufgabe darin besteht, den Ein- bzw. Anbau von Elektroinstallationsgeräten zu ermöglichen. In zweiter Linie dient das U-Profil dazu, die Leitungskapazität des Kanals zu vergrößern.

Bei der Konstruktion der Verbindungselemente wurde besonders darauf geachtet, dass sich alle Elemente unter Verwendung derselben Rast- und Halteprofile zusammenstecken lassen, wobei auch darauf geachtet wurde, dass der komplette Kanal ausreichend stabil bleibt.

Unterstützt wird dies durch Kopf- und /oder Fußplatten, die die Enden der Seitenprofile und gegebenenfalls der U-Profile miteinander verbinden.

Weiterbildungen und Ausgestaltungen der Erfindung ergeben sich aus den Unteransprüchen in Verbindung mit der nachfolgenden Beschreibung von Ausführungsbeispielen anhand der Zeichnung. Es zeigen jeweils in isometrischer Darstellung
- Fig. 1: ein Seitenprofil,
- Fig. 2: ein U-Profil,
- Fig. 3: einen Kanal, zusammengesteckt aus zwei Seitenprofilen und zwei U-Profilen mit zugehörigen Deckeln,
- Fig. 4: einen Kanal, hergestellt aus zwei Seitenprofilen und einem U-Profil mit montiertem Elektroinstallationsgerät,
- Fig. 5: eine deckenhohe Energiesäule,
- Fig. 6: eine Trennwand für Büroräume, aufgestellt unter Verwendung von wandhohen Energiesäulen, und
- Fig. 7: einen Ausschnitt aus einer Energiesäule von Fig. 6.

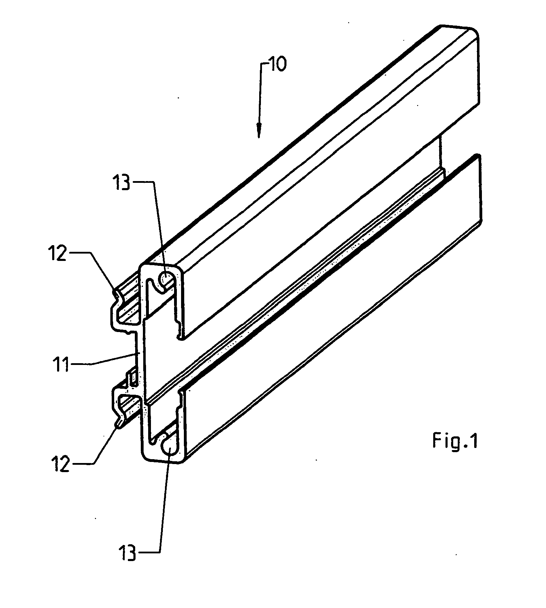

Fig. 1 zeigt in isometrischer Darstellung ein Seitenprofil 10. Dieses umfasst eine Wandleiste 11, an deren einer Seite zwei entgegengesetzt orientierte Halteprofile 12 angeformt sind. Zur Erhöhung der Festigkeit hat die Wandleiste 11 einen C-förmigen Querschnitt, wobei stirnseitige Öffnungen 13 angearbeitet sind, in die Kupplungsstifte eingesteckt werden können, die die exakt fluchtende Verbindung zweier Seitenprofile 10 ermöglichen.

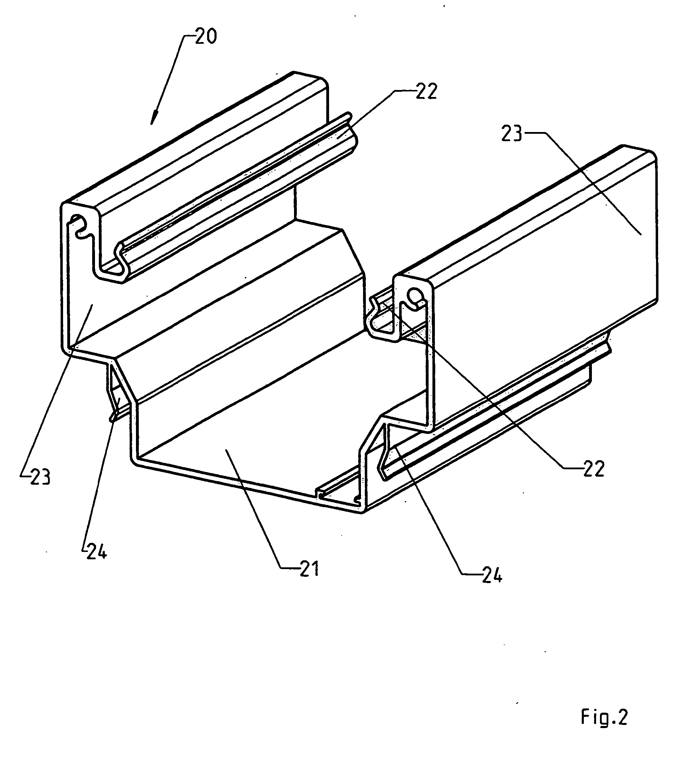

Fig. 2 zeigt in isometrischer Darstellung ein U-Profil 20. Dieses besitzt einen Boden 21, von dem zwei stufenförmige Seitenwände 23 abgehen, die an ihren freien Kanten Deckelhalteprofile 22 tragen. Rastprofile 24 sind im Bereich der Seitenwandstufe angeformt.

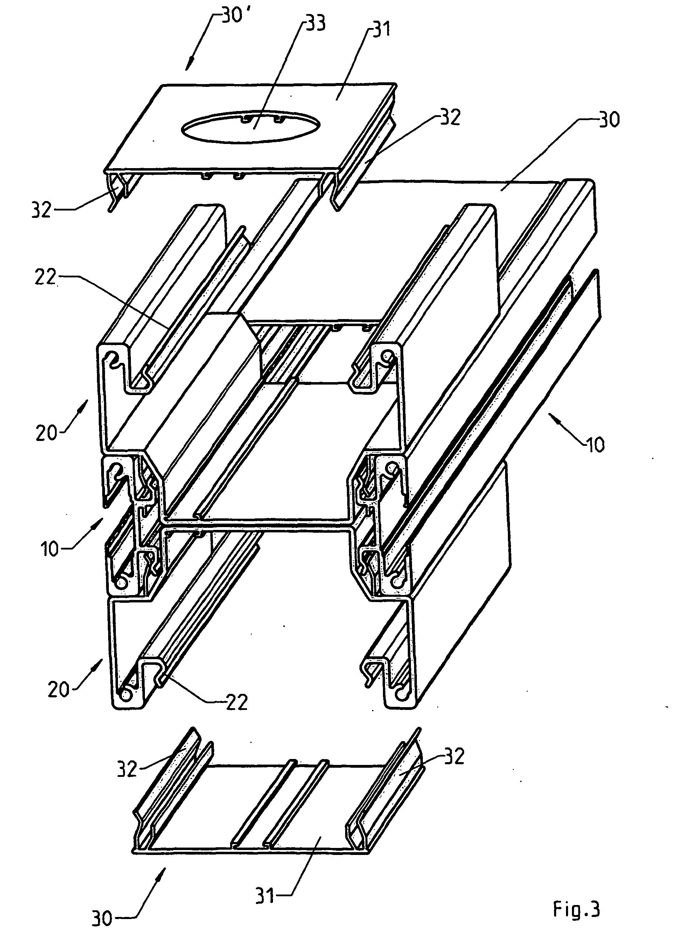

Fig. 3 zeigt einen Kanal, zusammengesetzt aus zwei Seitenprofilen 10, auf die zwei U-Profile 20 aufgerastet sind. Dabei rasten die Gegenhalteprofile 24 an den Seitenwänden 23 in die Halteprofile 12 an der Wandleiste 11 ein.

Dargestellt sind des weiteren Deckel 30, 30', die auf die Deckelhalteprofile 22 der U-Profile 20 aufgerastet werden können. Zu diesem Zweck besitzt jeder Deckel 30, 30' Rastprofile 32 an einer Deckelleiste 31.

Der Deckel 30' besitzt eine zentrale Öffnung 33, die den Zugang zu einer Steckdose oder dergleichen ermöglicht.

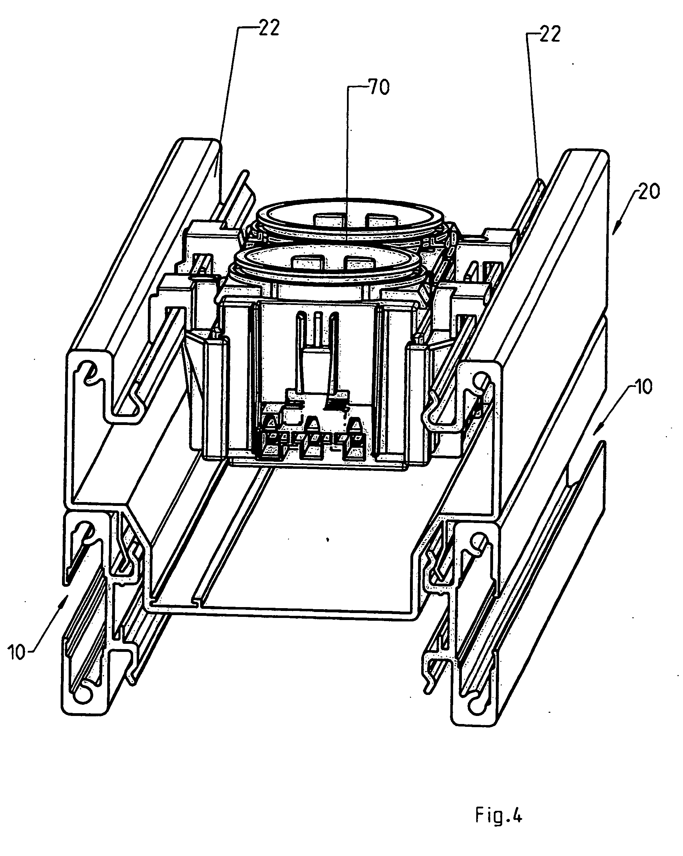

Fig. 4 zeigt eine Kombination zweier Randleisten 10 mit einem U-Profil 20. In dessen Deckelhalteprofil 22 ist ein Elektroinstallationsgerät 70, hier eine Steckdose, eingehängt.

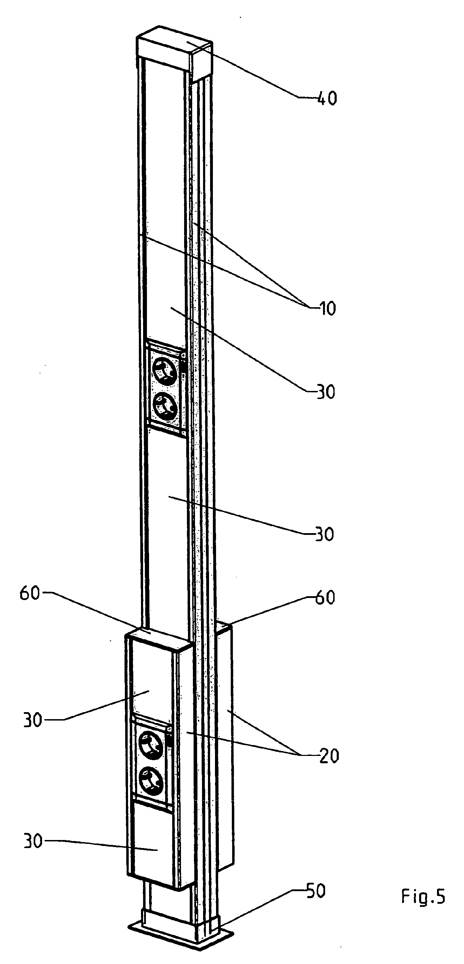

Fig. 5 zeigt eine deckenhohe Energiesäule, zusammengesetzt aus zwei Seitenprofilen 10, zwei aufgerasteten kürzeren U-Profilen 20, einer Kopfplatte 40 und einer Fußplatte 50, die die Enden der beiden Seitenprofile 10 miteinander verbinden. Sowohl in die beiden Seitenprofile 10 als auch in das U-Profil 20 sind Elektroinstallationsgeräte in Form von Doppelsteckdosen eingesetzt. Die Seitenprofile 10 und die U-Profile 20 sind zusätzlich mit Deckeln 30 verschlossen. Auf die offenen Enden der U-Profile 20 sind Abschlussprofile 60 aufgesetzt. Dadurch ist die Energiesäule allseitig verschlossen, wie es die elektrische Sicherheit verlangt.

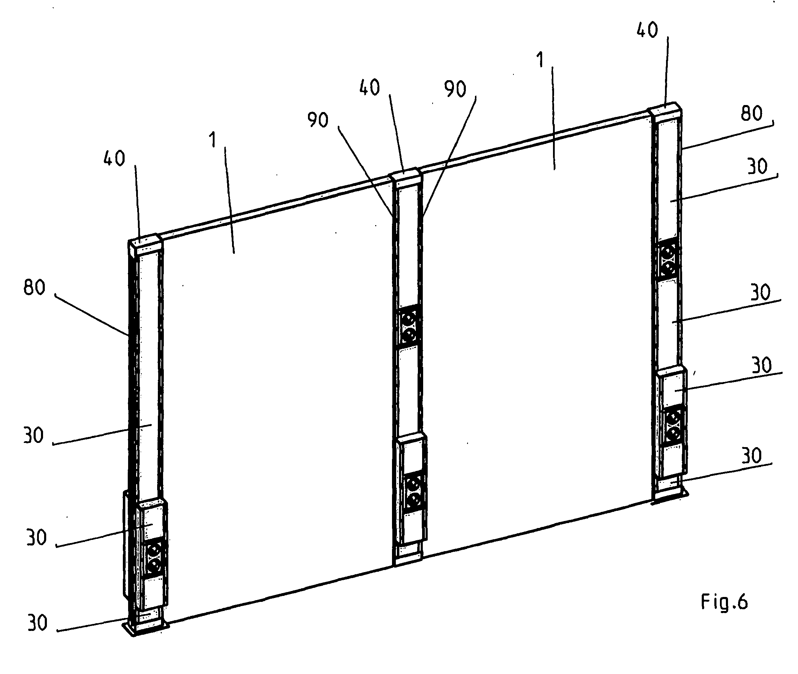

Fig. 6 zeigt in isometrischer Darstellung eine Trennwand, wie sie bevorzugt in Büroräumen verwendet wird. Die Trennwand ist zusammengesetzt aus Wandelementen 1, die mit Hilfe je einer Energiesäule gehalten bzw. verbunden sind.

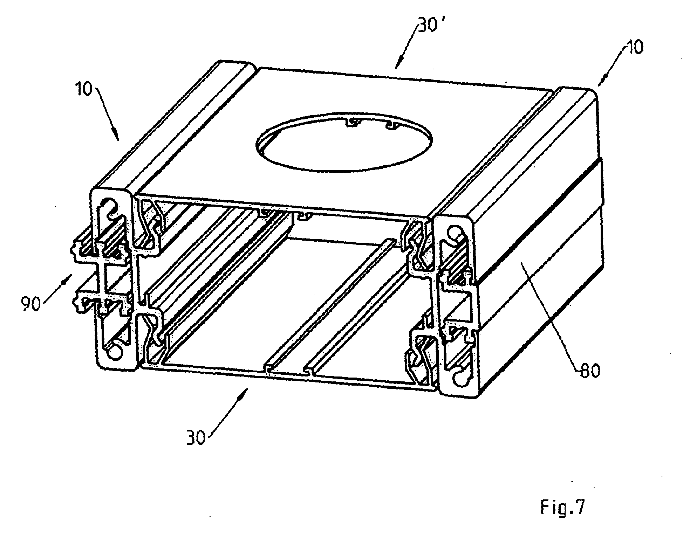

Die Kopplung zwischen Trennwandelement 1 und Energiesäule erfolgt mit Hilfe eines Koppelprofils 90, welches formschlüssig mit dem Seitenwandprofil 10 kooperiert und wie es in Fig. 7 dargestellt ist.

Fig. 7 lässt des weiteren ein Abschlussprofil 80 erkennen, welches den C-Querschnitt der Wandleiste 11 des Seitenprofils 10 verschließt.

## Patentansprüche

1. Kanal für Leitungsführung und/oder Geräteeinbau, im wesentlichen umfassend
- wenigstens einen Deckel (30, 30') mit
- einer Deckelleiste (31)
- und davon abgehenden Rastprofilen (32),
- eine Anzahl von Kanalprofilen (10, 20), die zu einem Kanal zusammenfügbar und mit Deckel (30, 30') verschließbar sind,
**gekennzeichnet durch**
- zwei Seitenprofile (10), gebildet aus
- einer Wandleiste (11)
- und wenigstens einem daran angeformten Halteprofil (12), passend zu den Rastprofilen (32),
- und wenigstens einem U-Profil (20), gebildet aus
- einem Boden (21),
- zwei Seitenwänden (23),
- Deckelhalteprofilen (22) an den freien Kanten der Seitenwände (23), passend zu den Rastprofilen (32)
- und Gegenhalteprofilen (24) an den Seitenwänden (23), passend zu dem Halteprofil (12).

2. Kanal nach Anspruch 1, **gekennzeichnet durch**
- zwei entgegengesetzt orientierte Halteprofile (12) an der Wandleiste (11).

3. Kanal nach Anspruch 1 oder 2, **gekennzeichnet durch**
- eine Stufenform der Seitenwände (23) im Bereich der Gegenhalteprofile (24).

4. Kanal nach einem der Ansprüche 1 bis 3, **gekennzeichnet durch**
- zwei U-Profile (20), Boden (21) an Boden (21) positioniert und mit ihren Gegenhalteprofilen (24) auf die Halteprofile (12) zweier Seitenprofile (10) aufgerastet.

5. Kanal nach einem der Ansprüche 1 bis 4, **gekennzeichnet durch**
- eine Kopfplatte (40), die die beiden Seitenprofile (10) endseitig miteinander verbindet.

6. Kanal nach einem der Ansprüche 1 bis 5, **gekennzeichnet durch**
- eine Fußplatte (50), die die beiden Seitenprofile (10) gegebenenfalls mit aufgerasteten U-Profilen (20) endseitig miteinander verbindet.

7. Kanal nach einem der Ansprüche 1 bis 6, **gekennzeichnet durch**
- ein Abschlussprofil (60), das die offenen Enden der aufgesetzten U-Profile (20) verschließt.

8. Kanal nach einem der Ansprüche 1 bis 7, **gekennzeichnet durch** das Merkmal:
- Abschlussprofile (80) verschließen die Lücken im C-Profil (11) der Seitenprofile (10).

9. Kanal nach einem der Ansprüche 1 bis 8, **gekennzeichnet durch** das Merkmal:
- Koppelprofile (90) verbinden ein Seitenprofil (10) mit einem weiteren Seitenprofil (10') oder einem Trennwandelement (1).

10. Kanal nach einem der Ansprüche 1 bis 9, **gekennzeichnet durch** die Verwendung von Leichtmetall.

## Claims

1. Channel for cabling and/or apparatus mounting, essentially comprising
- at least one cover (30, 30') with
- a cover strip (31)
- and locking profiles (32) extending therefrom,
- a number of channel profiles (10, 20) which can be assembled to form a channel and can be closed by the cover (30, 30'),
**characterised by**
- two side profiles (10), formed from
- a wall strip (11)
- and at least one retaining profile (12) which is formed thereon and matches the locking profiles (32),
- and at least one U-profile (20), formed from
- a bottom (21),
- two side walls (23),
- cover retaining profiles (22) at the free edges of the side walls (23) which match the locking profiles (32),
- and mating retaining profiles (24) at the side walls (23) which match the retaining profile (12).

2. Channel according to Claim 1, **characterised by**
- two retaining profiles (12) at the wall strip (11) oriented in different directions.

3. Channel according to Claim 1 or 2, **characterised by**
- a stepped shape of the side walls (23) in the region of the mating retaining profiles (24).

4. Channel according to any one of Claims 1 to 3,
**characterised by**
- two U-profiles (20), the floor (21) positioned on the floor (21) and with their mating retaining profiles (24) locked onto the retaining profiles (12) of two side profiles (10).

5. Channel according to any one of Claims 1 to 4,
**characterised by**
- a head plate (40) which connects the two side profiles (10) together at the ends.

6. Channel according to any one of Claims 1 to 5,
**characterised by**
- a base plate (50) which connects the two side profiles (10) together at the ends, optionally with locked-on U-profiles (20).

7. Channel according to any one of Claims 1 to 6,
**characterised by**
- a closing profile (60) which closes the open ends of the positioned U-profiles (20).

8. Channel according to any one of Claims 1 to 7, **characterised by** the feature:
- closing profiles (80) close the gaps in the C-profile (11) of the side profiles (10).

9. Channel according to any one of Claims 1 to 8, **characterised by** the feature:
- coupling profiles (90) connect one side profile (10) to a further side profile (10') or a partition element (1).

10. Channel according to any one of Claims 1 to 9, **characterised by** the use of light metal.

## Revendications

1. Goulotte pour le câblage et/ou le montage d'appareillage, comprenant pour l'essentiel :
- au moins un couvercle (30, 30') comportant
- un bandeau d'obturation (31)
- et des profilés d'enclenchement (32) faisant saillie de ce dernier,
- un certain nombre de profilés de goulotte (10, 20) pouvant être assemblés de manière à former une goulotte et pouvant être fermés par le couvercle (30, 30'),
**caractérisée par**
- deux profilés latéraux (10), formés par
- un bandeau mural (11)
- et au moins un profilé de fixation (12) complémentaire aux profilés d'enclenchement (32),
- et au moins un profilé en U (20), formé par
- un fond (21)
- deux parois latérales (23),
- des profilés de fixation de couvercle (22) au niveau des arêtes libres des parois latérales (23), qui sont complémentaires aux profilés d'enclenchement (32),
- et des contre-profilés de fixation (24) sur les parois latérales (23), qui sont complémentaires au profilé de fixation (12).

2. Goulotte selon la revendication 1, **caractérisée par** deux profilés de fixation (12) sur le bandeau mural (11), qui sont orientés à l'opposé l'un de l'autre.

3. Goulotte selon la revendication 1 ou 2, **caractérisée par** une forme étagée des parois latérales (23) dans la zone des contre-profilés de fixation (24).

4. Goulotte selon l'une des revendications 1 à 3, **caractérisée par** deux profilés en U (20) qui sont positionnés fond (21) contre fond (21) et enclenchés avec leur contre-profilés de fixation (24) sur les profilés de fixation (12) de deux profilés latéraux (10).

5. Goulotte selon l'une des revendications 1 à 4, **caractérisée par** un embout supérieur (40) qui relie entre eux les deux profilés latéraux (10) par leur extrémité.

6. Goulotte selon l'une des revendications 1 à 5, **caractérisée par** un embout inférieur (50) qui relie entre eux, par leur extrémité, les deux profilés latéraux (10) sur lesquels sont éventuellement enclenchés des profilés en U (20).

7. Goulotte selon l'une des revendications 1 à 6, **caractérisée par** un profilé de finition (60) qui ferme les extrémités ouvertes des profilés en U (20) montés en saillie.

8. Goulotte selon l'une des revendications 1 à 7, **caractérisée en ce que** des profilés de finition (80) masquent les creux dans le profilé en C (11) des profilés latéraux (10).

9. Goulotte selon l'une des revendications 1 à 7, **caractérisée en ce que** des profilés d'accouplement (90) relient un profilé latéral (10) à un autre profilé latéral (10') ou à un élément de cloison (1).

10. Goulotte selon l'une des revendications 1 à 9, **caractérisé par** l'utilisation de métal léger.
